(19) Europäisches Patentamt
European Patent Office
Office européen des brevets

(11) **EP 4 410 497 A1**

(12) **EUROPEAN PATENT APPLICATION**

(43) Date of publication:
**07.08.2024 Bulletin 2024/32**

(21) Application number: **23154371.1**

(22) Date of filing: **01.02.2023**

(51) International Patent Classification (IPC):
***B25J 9/16*** (2006.01)

(52) Cooperative Patent Classification (CPC):
**B25J 9/1697; B25J 9/1679;** G05B 2219/37555;
G05B 2219/40053; G05B 2219/40564;
G05B 2219/45063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **SATHYA NARAYANAN, Gokul Narayanan
Emeryville, CA, 94608 (US)**

• **SHAHAPURKAR, Yash
Berkeley, CA, 94704 (US)**
• **GAO, Kai
Piscataway, NJ, 08854 (US)**
• **YAMADA, William
Madison, WI, 53705 (US)**

(74) Representative: **Horn Kleimann Waitzhofer
Schmid-Dreyer
Patent- und Rechtsanwälte PartG mbB
Theresienhöhe 12
80339 München (DE)**

(54) **ROBOTIC PACKING OF UNKNOWN OBJECTS**

(57)     Bin packing refers to a robot grasping objects that can define random or arbitrary poses, and placing them into a container or bin. It is recognized herein, however, that current approaches to robotic packing lack efficiency and capabilities. In particular, current approaches often rely on known objects having regular shapes and/or do not properly or efficiently make use of the packing space, due to various technical challenges in doing so. An autonomous system can include a robot that packs containers with objects that define non-rigid or irregular shapes, such that the packed objects are stable after placement and are not adjusted (e.g., pushed or pulled) by the robot after placement in the container.

FIG. 1

EP 4 410 497 A1

**Description**

BACKGROUND

Autonomous operations, such as robotic grasping and manipulation, in unknown or dynamic environments present various technical challenges. Autonomous operations in dynamic environments may be applied to mass customization (e.g., high-mix, low-volume manufacturing), on-demand flexible manufacturing processes in smart factories, warehouse automation in smart stores, automated deliveries from distribution centers in smart logistics, and the like. In order to perform autonomous operations, robots might interact with different objects under different situations. Some of the objects might be unknown to a given robot. Bin picking and packing are example operations that robots can perform using artificial intelligence (AI) or computer vision techniques. Bin packing refers to a robot grasping objects that can define random or arbitrary poses, and placing them into a container or bin. It is recognized herein, however, that current approaches to robotic packing lack efficiency and capabilities. In particular, current approaches often rely on known objects having regular shapes and/or do not properly or efficiently make use of the packing space, due to various technical challenges in doing so.

BRIEF SUMMARY

Embodiments of the invention address and overcome one or more of the described-herein shortcomings or technical problems by providing methods, systems, and apparatuses for packing bins using autonomous devices or robots. In particular, for example, robots can pack containers with objects that define non-rigid or irregular shapes, such that the packed objects are stable after placement and are not moved (e.g., pushed or pulled) by the robot after placement in the container.

In an example aspect, an autonomous system includes a robot configured to pick and place objects into containers within a workspace. The autonomous system includes a robot defining an end effector configured to grasp a first object within a workspace. The first object defines a bottom end and a top end opposite the bottom end along a transverse direction. The system further includes a first camera configured to capture a first image of the first object along the transverse direction while the robot grasps the first object, such that the first image includes the bottom end of the first object. The system further includes a second camera configured to capture a second image of a container within the workspace. The system further includes a memory storing instructions that, when executed by the one or more processors, cause the autonomous system to perform various operations. In particular, for example, based on the second image, the system can generate a heightmap of the container. The heightmap can indicate respective distances defined by the container and any objects within the container along the transverse direction. Based on the heightmap and the first image, the system can perform an optimization so as to determine an optimal pose within the container for the first object. The optimal pose can define a location within the container and an orientation of the first object. In various examples, the robot is further configured to place the first object within the container in the optimal pose without re-adjusting the first object or any other objects within the container after placement in the container.

Furthermore, the container can define a bottom end and a top end opposite the bottom end along the transverse direction. The bottom end can be positioned farther from the second camera along the transverse direction as compared to the top end, and the top end can define an opening and walls of the container around the opening such that the second camera is further configured to capture the second image of the container from a perspective along the transverse direction. Based on the heightmap, the system can determine whether one or more areas of objects within the container are curved or tilted so as to define a nonzero slope ratio with respect to the transverse direction. When one or more areas of the objects within the container define the nonzero slope ratio, the system can penalize those one or more areas during the optimization. The system can determine a plurality of contact surfaces corresponding to a plurality of candidate poses of the first object within the container, the contact surfaces defined by the walls of the container, the bottom end of the container, and outer surfaces of the object within the container. The system can select an optimal contact surface of the plurality of contact surfaces so as define a selected contact surface, wherein the first object is proximate to the selected contact surface when the first object is disposed in the optimal pose.

In another example aspect, based on the heightmap, the system can identify a corner location defined by two sides of at least one of the objects within the container or the walls of the container. The corner location can define an initial candidate pose of the plurality of candidate poses. Based on a shape defined by the first object and a boundary defined by the corner location, the system can determine an angle of rotation about the transverse direction so as to optimize the initial candidate pose, thereby aligning the shape with the boundary. When the angle of rotation is applied to the first object, the first object can be positioned in the orientation of the optimal pose that corresponds to the corner location. Furthermore, after grasping the first object, the robot can rotate the first object about the transverse direction an amount defined by the angle of rotation, wherein the amount can be any value between 0 and 360 degrees. After rotating the first object, the robot can place the first object within the container in the optimal pose at the corner location.

BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:

   FIG. 1 shows an example autonomous system in an example physical environment that includes a packing container capable of containing various objects, in accordance with an example embodiment.

   FIG. 2 is a flow diagram that illustrations example operations that can be performed by the autonomous system, so as to determine optimal poses for various objects within the packing container.

   FIG. 3 illustrates the packing container from an overhead perspective, so as to show example objects within the container that define different height levels and corners.

   FIG. 4 illustrates a computing environment within which embodiments of the disclosure may be implemented.

DETAILED DESCRIPTION

As an initial matter, robotic bin packing generally consists of a robot equipped with sensors or cameras, such that the robot can grasp (pick) objects in random poses from a container (bin) or tray using a robotic end effector, and place the objects in a target container or bin. Bin, container, bag, tray, box, or the like can define the target and can be used interchangeably herein, without limitation, unless otherwise specified. In various examples described herein, objects can be known or known to the robot, and objects can be of the same type or mixed. Additionally, or alternatively, objects can define three dimensional (3D) non-rigid or irregular shapes. In various examples, an autonomous system that can perform robotic bin packing has no prior knowledge of the objects that are being packed. In particular, for example, the autonomous system might have no prior knowledge of the geometry of the objects, the sequence at which the objects are packed, or respective grasp points of the objects.

Furthermore, it is recognized herein, in some cases, the state of the bin after placement of each object may be different than expected due to manipulation errors, environmental noise, object deformation, and the like. Thus, an objective, among others, realized by embodiments described herein is to make efficient use of the packing space defined by a given container, while assuring object stability after placement. In various examples described herein, each object is placed only once, so as to ensure the efficiency of the system throughput. That is, in various examples, there is no additional push or grasp performed to refine the object placements after each object is placed.

By way of further background, it is recognized herein that previous two dimensional and 3D dimensional (2D/3D) bin packing technologies were often related to truck loading scenarios. These problems investigate the optimal loading strategies to place packages into a truck or container. For example, such strategies can define positioning heuristics for good space utilization or other constraints (e.g., weight balancing). It is further recognized herein that such problems generally only consider packing rectangular items with limited options of orientation (e.g., orthogonal orientations only). Still further, it is recognized herein that in light of the focus on the loading strategy, such prior approaches do not consider manipulation errors or uneven mass distribution of each package. Various embodiments described herein account for the above-identified factors while finding the optimal placement strategy.

In the development of robotics, current approaches can pick and place objects in containers. It is recognized herein, however, that to pack objects densely in such containers, current approaches generally execute an initial placement with a pick-n-place and have additional pushes to adjust the placement pose. It is further recognized herein, however, that in the industrial setting, additional adjustments can lead to a potential reduction of efficiency. Additionally, when the target bin or the objects move on a conveyor, there might be no time for extra adjustments after the initial packing. Thus, embodiments described herein define a bin/bag packing system that can place each object once without adjustments and without knowledge of input objects.

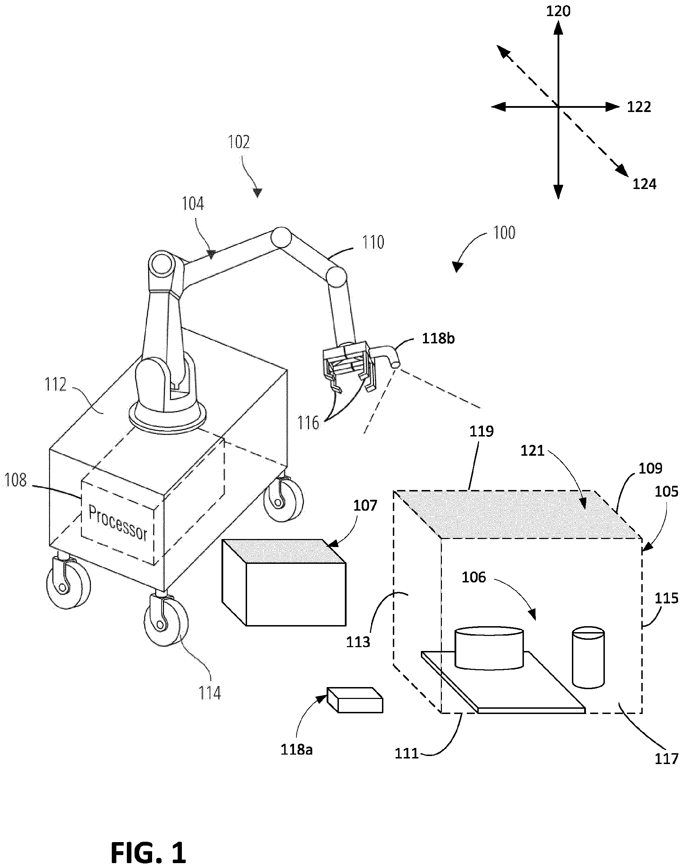

Referring now to FIG. 1, an example industrial or physical environment or workspace 100 is shown. As used herein, a physical environment or workspace can refer to any unknown or dynamic industrial environment. Unless otherwise specified, physical environment and workspace can be used interchangeably herein, without limitation. For purposes of example, the objects 106 can be disposed in a bin or container, for instance a grasping bin or container 107, in various arbitrary configurations so as to be positioned for grasping. Unless otherwise specified herein, bin, container, tray, box, or the like can be used interchangeably, without limitation. By way of example, the object 106 can be picked from the bin 107 by one or more robots, and transported or placed another container, for instance a packing bin or container 105. The example objects 106 define various shapes and sizes, though it will be understood that the objects 106 can be alternatively shaped or define alternative structures as desired, and all such objects are contemplated as being within the scope of this disclosure.

The physical environment 100 can include a computerized autonomous system 102 configured to perform one or more manufacturing operations, such as assembly, transport, or the like. The autonomous system 102 can include one or more robot devices or autonomous machines, for instance an autonomous machine or robot device 104, configured to perform one or more industrial tasks, such as bin picking, grasping, bin packing, or the like. The system 102 can include one or more computing processors configured to process information and control operations of the system 102, in particular the autonomous machine 104. The autonomous machine 104 can include one or more processors, for instance a processor 108, configured to process information and/or control various operations associated with the autonomous machine 104. An autonomous system for operating an autonomous machine within a physical environment can further include a memory for storing modules. The processors can further be configured to execute the modules so as to process information and generate models based on the information. It will be understood that the illustrated environment 100 and the system 102 are simplified for purposes of example. The environment 100 and the system 102 may vary as desired, and all such systems and environments are contemplated as being within the scope of this disclosure.

Still referring to FIG. 1, the autonomous machine 104 can further include a robotic arm or manipulator 110 and a base 112 configured to support the robotic manipulator 110. The base 112 can include wheels 114 or can otherwise be configured to move within the physical environment 100. The autonomous machine 104 can further include an end effector 116 attached to the robotic manipulator 110. The end effector 116 can include one or more tools configured to grasp and/or move objects 106. Example end effectors 116 include finger grippers or vacuum-based grippers. The robotic manipulator 110 can be configured to move so as to change the position of the end effector 116, for example, so as to place or move objects 106 within the physical environment 100. The system 102 can further include one or more cameras or sensors, for instance three-dimensional (3D) point cloud or depth cameras 118, configured to detect or record objects 106 within the physical environment 100. A first depth camera 118a can be placed on a surface so as to face upward and be configured to generate a 3D point cloud of a given object while the object is grasped by the end effector 116. Alternatively, or additionally, a second depth camera 118b can be mounted to the robotic manipulator 110 or otherwise configured to generate a 3D point cloud of a given scene, for instance the physical environment 100. In some cases, the one or more cameras of the system 102, for instance the first and second cameras 118a and 118b, can include one or more standard two-dimensional (2D) cameras that can record or capture images (e.g., RGB images or depth images) from different viewpoints. Those images can be used to construct 3D images. For example, a 2D camera can be mounted to the robotic manipulator 110 so as to capture images from perspectives along a given trajectory defined by the manipulator 110.

With continuing reference to FIG. 1, the first depth camera 118a can be configured to capture images of objects 106 within the workspace while the robot 104 grasps the objects, along a first or transverse direction 120. The objects 106 can define a bottom end and top end opposite the bottom end along the transverse direction 120. In various examples, the images of the grasped objects include the bottom end of the objects. Similarly, the second depth camera 118b can be configured to capture images of the packing bin 105 and the grasping bin 107, and thus the objects 106 within the bins 105 and 107, along the first or transverse direction 120. The packing container 105 can define a top 109 end and a bottom end 111 opposite the top end 109 along the transverse direction 120. In various examples described herein, objects are placed within the container 105 such that the bottom end of a give object faces the bottom end 111 of the container 105. The container 105 can further define a first side 113 and a second side 115 opposite the first side 113 along a second or lateral direction 122 that is substantially perpendicular to the transverse direction 120. The container 105 can further define a front end 117 and a rear end 119 opposite the front end 117 along a third or longitudinal direction 124 that is substantially perpendicular to both the transverse and lateral directions 120 and 122, respectively. Thus, the first side 113, second side 115, front end 117 and rear end 119 can define walls of the container 105. Though the illustrated packing container 105 defines a rectangular shape, it will be understood that bins or containers can be alternatively shaped or sized, and all such bins or containers are contemplated as being within the scope of this disclosure. By way of example, the packing container 105 may be alternatively shaped so as to define fewer than, or greater than, four walls.

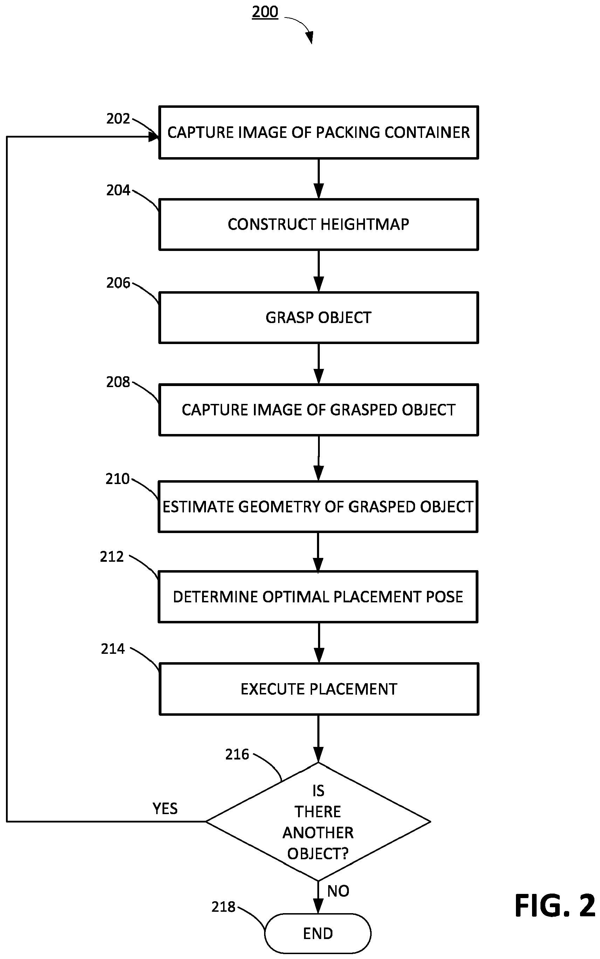

Referring also to FIG. 2, example operations 200 are shown that can be performed by a computing system, for instance the autonomous system 102. At 202, the system 102, for instance the depth camera 118b, can capture an image of the packing container 105. The capture image can define RGB-D information corresponding to the packing container 105. If objects 106 are contained within the packing container, the captured image can define RGB-D information corresponding to the packing container 105 and any objects 106 disposed within the packing container 105. At 204, based on the captured image, the system 102 can construct or generate a heightmap of the container 105 and objects 106 disposed therein. The heightmap can indicate respective distances along the transverse direction 120 between the camera 118b and the packing container 105 and any objects 106 disposed within the packing container 105. Additionally, or alternatively, the heightmap can indicate respective distances from the bottom end 111 of the packing container to outermost surfaces along the transverse direction 120 defined by the packing container 105 and the objects 106 within the packing container 105.

With continuing reference to FIG. 2, at 206, the robot 104 can pick or grasp a given object 106, for instance one of the objects disposed within the grasping bin 107, for placement into the packing bin 105. In various examples, the camera 118b can capture an image of a given object, and based on the image, the robot 104 can grasp the given object, such that the object is grasped in a model-free manner. Alternatively, when the given object is known to the system 102, in some cases, the system 102 can use a model of the given object to grasp the object. At 208, the robot 104 can move and position the grasped object over the depth camera 118a, such that the depth camera 118a can capture a depth image of the object from a perspective below the object along the transverse direction 120. Thus, the image of the grasped object captured by the camera 118a can include the bottom end of the grasped object. The packing container 105 can be supported by a surface, such as a table, conveyer, or the like. In some examples, the depth camera rests upon the same surface as the packing container 105. In other examples, the depth camera can be supported by a different surface than the surface that supports the packing container 105. The depth camera 118a can capture the image of the grasped object when the end effector 116, and thus the grasped object, is positioned above and in view of the depth camera a predetermined distance or height from the camera 118a along the transverse direction 120. Based on the image of the object, in particular a bottom surface defined by the object, the system 102 can generate a 3D point cloud of the grasped object. At 210, based on the predetermined distance (height) and the 3D point cloud, the system 102 can estimate a geometry defined by the grasped object. In various examples, the system 102 estimates the object to define a generalized cylinder or cuboid, though it will be understood that the system can 102 can estimate other geometric shapes based on the point cloud, and all such geometric shapes are contemplated as being within the scope of this disclosure. At 212, based on the geometry of the grasped object, and thus based on the image of the grasped object, and based on the current heightmap of the packing bin 105, the system 102 can perform an optimization so as to compute or determine an optimal pose of the grasped object within the packing container 105. The optimal pose (or optimal placement pose) can define a location within the container 105 and an orientation of the grasped object within the container. In some cases, because the object geometry might define an estimation, the placement poses that are considered by the system 102 define a pitch and roll equal to 0.

To evaluate various placement positions or poses (P), in various examples, the system 102 solves an objective function that can be represented as:

$$J(p) = -H(p) + c_1 C(p) - c_2 S(p),$$

where H(p) measures the placement height defined by the pose *p*; *C(p)* measures the closeness defined by the pose p between the current (grasped) object and the other objects 106 that have already been placed within the packing container 105; S(p) measures the slope ratio of the placement position (p); and $c_1$ and $c_2$ represent constants that define parameters (e.g., stability parameter, density or tightness parameter) that can be adjusted. For example, the constants can be tuned/adjusted to modify the performance/characteristic of the system. By way of further example, if the value of $c_1$ that can correspond to tightness is increased, the final performance can result in a more tightly packed bin as compared to a bin before the value $c_1$ is increased. Thus, the constants can define coefficient parameters that determine the characteristics of the system.

In various examples, the placement height H(p) defines a metric that measures placement quality of a particular pose or position p. Thus, in various examples, H(p) does not define the performance of the system, but instead defines one of the decision variables of the objective that can be optimized to achieve the characteristics needed. The placement height can define a distance between the object and the bottom end 111 of the packing container 105. For example, the placement height can be referred to as the z distance of the point inside the bin to the bottom end 111 of the bin 105. The system 102 can perform pre-processing step to group points having the same height as a region, and thus the placement height H(p) can corresponds to the z-height (height along the transverse direction 120) of this region with respect to the bottom end 111. Thus, this decision variable can correspond to the part of the objective function that determines whether to give more preference to the stacking of objects or to spread them evenly. In various examples, placing objects at low positions so as to lessen the placement height as compared to placing objects at high positions, can enhance the utilization of the space defined by the packing container 105, and can improve the stability of the objects within the packing container 105. Improving stability of the objects can refer to reducing the potential that objects within the packing container 105 collapse, or reducing the potential damage that results if objects within the packing container 105 collapse. The depth camera 118b that can be mounted on the robot 104 can capture images used to create the heightmap of the packing container 105. The heightmap can indicate various height levels defined by the objects disposed within the packing container 105. The system 102 can also perform a pre-processing operation that smoothens the surface defined by the captured image of the container 105. Smoothening the surface can refer to removing noise from the captured image, and grouping regions having the same height into a single surface.

In various examples, the closeness C(p) defines a metric that measures space utilization of a particular pose or position p. In particular, the closeness can define where the object touches the environment defined by the packing container 105. The environment defined by the packing container can include the container 105 itself, for instance the bottom end 111, first side 113, second side 115, front end 117, and rear end 119, and objects that have already been placed within the packing bin 105. For example, adjusting the closeness C(p) can result in a change to tightness of one or more of the objects packed within the container 105 with respect to each other or with respect to the container 105. Thus, adjusting the closeness C(p) can result in controlling the scattering of objects in free space defined by the packing container 105. In some cases, adjusting closeness can prioritize poses that fit into gaps defined by other objects and/or the bin 105 itself.

In an example, based on the heightmap, the system 102 can determine a plurality of contact surfaces corresponding to a plurality of candidate poses of the grasped object within the containers. The contact surfaces can be defined by the walls of the container 105, the bottom end 111 of the container 105, and outer surfaces defined by any objects already disposed within the container 105. The system 102 can select an optimal contact surface of the plurality of contact surfaces so as to define a selected contact surface, such that the grasped object is proximate to the selected contact surface when the grasped object is disposed in the optimal pose. Thus, closeness can correspond to the sides of the container 105 and other objects 106 within the container 105. In various examples, the characteristic of prioritizing poses that fit into gaps is achieved as an objective outcome of the objective function described herein when the function defines a high coefficient for the closeness variable.

In some cases, after a given object is placed in the packing container 105, the object might be tilted or angled with respect to the transverse direction 120, or might define a curved top surface (end) or otherwise define a slope ratio S(p) that is nonzero with respect to the transverse direction 120. After the system constructs a given heightmap of the packing container 105, the system 102 can evaluate the heightmap to determine whether the heightmap defines a continuous assent or descent so as to define a nonzero slope ratio. In various examples, area corresponding to the nonzero slope ratio can be penalized based on their slope ratio. For example, based on the heightmap, the system 102 can determine whether one or more areas of the top ends of the objects 106 already disposed within the container 105 is curved or tilted so as to define a nonzero slope ratio with respect to the transverse direction 120. When one or more areas of the top end of objects define the nonzero slope ratio, the system 102 can penalize those areas during the optimization described herein. For example, as the slope increases, the penalization for the corresponding area can increase. The penalization can be adjusted by the coefficient/constant term in the objective function corresponding to the decision variable S(p).

In some cases, the system 102 can perform slope detection so as to compute the slope ratio S(p) once per each grasped object, and the system 102 can perform height categorization so as to compute the placement height H(p) once per each grasped object. It is recognized herein, however, that the touching area or closeness C(p) might need to be evaluated for each candidate placement location or pose p. It is further recognized herein that such evaluations can be computationally expensive, especially when the candidate location space for placements is large. That is, in some cases, the computation time increases exponentially as the size of the container and the number of possible initial candidate locations increases. Furthermore, the function of closeness C(p) can be discontinuous because, for example, it can increase sporadically when a given object touches one or more neighboring objects. To address the issues identified above, among others, the system 102 can define an optimizer, for instance two-step optimizer, that performs a gradient descent based on distance to corners, and a local improvement based on shape alignment.

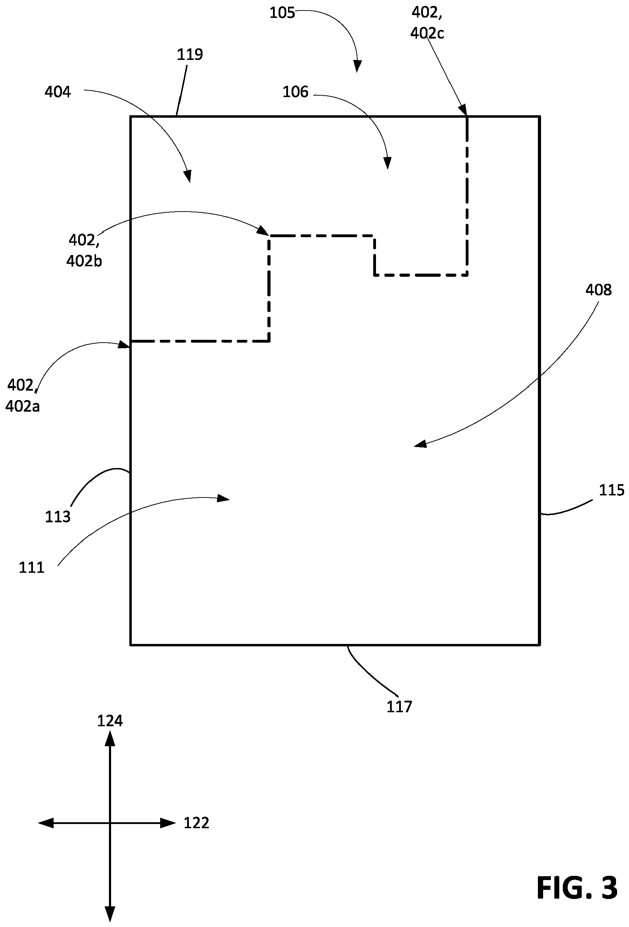

Referring to FIG. 3, the objects 106 within the container 105 and the container 105 itself can define one or more corners 402. The corners 402 can be defined at the same height or distance from a fixed point along the transverse direction 120, such that the corners are at a first height level 404 and other portions of the container 105 are at a second height level 408 that is defined by the bottom end 111. The system 102 can first perform the gradient descent optimization based on a distance from the object corner to the environment corner, for instance one of the corners 402. For example, the distance can be measured between the candidate's chosen location and the corner point that is being considered, along the lateral or longitudinal directions 122 and 124, respectively, such that the distance is measured at the same level (e.g., height) with respect to the transverse direction 120. Such an optimization can result in a valid initial candidate location that is proximate to the corner of the environment. By evaluating the distance to different corners of the environment, for instance corners 402a, 402b, and 402c, the system 402 can determine initial candidate locations that are proximate to different local optima. With respect to local optima, it is recognized herein that if all the points within the 3D space of the container are sampled to find the value of objective function for every point and then the best point is chosen, a global optimal solution is defined. It is further recognized herein, however, that such a global optimal solution can take exponential time with respect to the size of bin, and thus is not practical from a cost and processing perspective. Thus, the system 102 can select initial corner points as interest points and those points can be optimized. Without being bound by theory, is further recognized herein through experiments, that the solution achieved through the local optimal approach is often close to or equivalent to the global optimum. Thus, based on the heightmap, the system 102 can identify a plurality of corner locations defined by two sides of at least one of the objects disposed within the container or the walls of the container, wherein the plurality of corner locations define initial candidate poses of the plurality of candidate poses.

After the initial candidates are generated, the system 102 can perform the local improvement optimization based on shape alignment. For each initial candidate location, the system 102 aligns shapes between the grasped object and the neighboring boundaries defined by the environment using an iterative closest point (ICP). For example, after choosing an initial candidate solution, the boundary region of the object can be extracted and along with the boundary region of the environment (with objects) that the object would touch if it is placed on the chosen candidate solution. After extracting this information, the system 102 can perform an ICP operation that can output the operation to be performed (e.g., rotation and/or translation) to align both the boundary regions (minimizing the difference between the point clouds). If the boundary regions are aligned, the touching area can increase, which can increase the value of objective function, thereby increasing the stability of the container 105. Thus, by using the ICP, the closeness C(p) can be increased, thereby improving the candidate locations so as to generate the optimal placement pose at 212.

In particular, for example, based on a shape defined by a given object and a boundary defined by the corner location, the system 102 can determine an angle of rotation about the transverse direction 120 (yaw direction) so as to optimize the initial candidate pose, thereby aligning the shape with the boundary. When the angle of rotation is applied to the object, the object can be positioned in the orientation of the optimal pose that corresponds to the corner location. Furthermore, after grasping the object, the robot 104 can rotate the object about the transverse direction 120 (yaw direction) an amount defined by the angle of rotation, wherein the amount can be any value between 0 and 360 degrees. After rotating the object, the robot 104 can place the object within the container 105 in the optimal pose at the corner location.

Referring again to FIG. 2, after the optimal placement pose is generated, the robot 104 can execute the placement by placing the grasped object in the optimal placement pose within the packing container 105, at 214. In various examples, the grasped object is placed in the optimal placement pose without any making any adjustments after the robot 104 releases the object from its grasp. At 216, based on an image of objects 106, for instance based on the depth image of the grasping container 107, the system 102 can determine whether there is another object for the packing container 105. Additionally, or alternatively, at 216, the system 102 can determine whether the packing container 105 is packed such that no other objects are placed within the container, for instance based on the image of the packing container 105. When there is another object for the packing container 105, the process can 102 can return to 202, so that the depth camera 118b can capture an updated image of the packing container 105 that excludes the object that was just placed, and an updated heightmap can be constructed based on the updated image. The system 102 can repeat the operations 200 such that a new grasped object can be placed in its optimal pose as determined by the system 102. When there are no more objects for the packing container 105 or the packing container is sufficiently packed, the operations 200 can end, at 218.

Thus, as described herein, the system 102 can determine optimal poses for a various containers and place various objects at those optimal poses within the containers. Such objects can define irregular shapes or deformable shapes, in contrast to some previous approaches that focus on packing rectangular rigid objects. The optimal poses can define various yaw rotations, in contrast to some previous approaches that only consider two discrete yaw orientations (e.g., 0 and 90 degrees). The ICP operations described herein can return the amount of rotation needed to be performed to increase the alignment between the object and the environment surface (including objects). Furthermore, in various examples, the system 102 performs placements without any re-adjustment of any object after the objects are placed in the packing container. Such restrictions on re-adjustments can directly increase system throughput. In some examples, after an object is picked or grasped so as to define a picked position, the grasped object can be rotated along the yaw direction without altering the picked position that is set after picking up the object. As described herein, the system 102 can solve a continuous optimization problem to increase efficiency, without having prior knowledge of the objects that are being placed, which is often the case in various industrial settings in which an object list for packing is unknown or updated frequently.

Without being bound by theory, the system 102 that can define positioning heuristics described herein has proven to result in more stable placement of objects compared to prior approaches. In various examples, the maximum displacement between desired poses and actual poses of objects after placement is reduced by the system 102 as compared to various prior approaches.

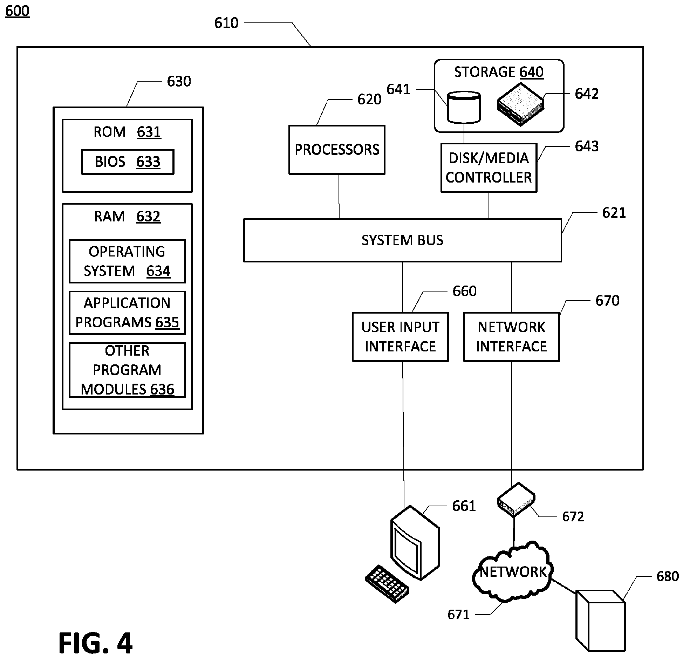

FIG. 4 illustrates an example of a computing environment within which embodiments of the present disclosure may be implemented. A computing environment 600 includes a computer system 610 that may include a communication mechanism such as a system bus 621 or other communication mechanism for communicating information within the computer system 610. The computer system 610 further includes one or more processors 620 coupled with the system bus 621 for processing the information. The autonomous system 102 may include, or be coupled to, the one or more processors 620.

The processors 620 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 620 may have any suitable micro architecture design that includes any number of constituent components such as, for example, registers, multiplexers, arithmetic logic units, cache controllers for controlling read/write operations to cache memory, branch predictors, or the like. The micro architecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 621 may include at least one of a system bus, a memory bus, an address bus, or a message bus, and may permit exchange of information (e.g., data (including computer-executable code), signaling, etc.) between various components of the computer system 610. The system bus 621 may include, without limitation, a memory bus or a memory controller, a peripheral bus, an accelerated graphics port, and so forth. The system bus 621 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 6, the computer system 610 may also include a system memory 630 coupled to the system bus 621 for storing information and instructions to be executed by processors 620. The system memory 630 may include computer readable storage media in the form of volatile and/or nonvolatile memory, such as read only memory (ROM) 631 and/or random access memory (RAM) 632. The RAM 632 may include other dynamic storage device(s) (e.g., dynamic RAM, static RAM, and synchronous DRAM). The ROM 631 may include other static storage device(s) (e.g., programmable ROM, erasable PROM, and electrically erasable PROM). In addition, the system memory 630 may be used for storing temporary variables or other intermediate information during the execution of instructions by the processors 620. A basic input/output system 633 (BIOS) containing the basic routines that help to transfer information between elements within computer system 610, such as during start-up, may be stored in the ROM 631. RAM 632 may contain data and/or program modules that are immediately accessible to and/or presently being operated on by the processors 620. System memory 630 may additionally include, for example, operating system 634, application programs 635, and other program modules 636. Application programs 635 may also include a user portal for development of the application program, allowing input parameters to be entered and modified as necessary.

The operating system 634 may be loaded into the memory 630 and may provide an interface between other application software executing on the computer system 610 and hardware resources of the computer system 610. More specifically, the operating system 634 may include a set of computer-executable instructions for managing hardware resources of the computer system 610 and for providing common services to other application programs (e.g., managing memory allocation among various application programs). In certain example embodiments, the operating system 634 may control execution of one or more of the program modules depicted as being stored in the data storage 640. The operating system 634 may include any operating system now known or which may be developed in the future including, but not limited to, any server operating system, any mainframe operating system, or any other proprietary or nonproprietary operating system.

The computer system 610 may also include a disk/media controller 643 coupled to the system bus 621 to control one or more storage devices for storing information and instructions, such as a magnetic hard disk 641 and/or a removable media drive 642 (e.g., floppy disk drive, compact disc drive, tape drive, flash drive, and/or solid state drive). Storage devices 640 may be added to the computer system 610 using an appropriate device interface (e.g., a small computer system interface (SCSI), integrated device electronics (IDE), Universal Serial Bus (USB), or FireWire). Storage devices 641, 642 may be external to the computer system 610.

The computer system 610 may also include a field device interface 665 coupled to the system bus 621 to control a field device 666, such as a device used in a production line. The computer system 610 may include a user input interface or GUI 661, which may comprise one or more input devices, such as a keyboard, touchscreen, tablet and/or a pointing device, for interacting with a computer user and providing information to the processors 620.

The computer system 610 may perform a portion or all of the processing steps of embodiments of the invention in response to the processors 620 executing one or more sequences of one or more instructions contained in a memory, such as the system memory 630. Such instructions may be read into the system memory 630 from another computer readable medium of storage 640, such as the magnetic hard disk 641 or the removable media drive 642. The magnetic hard disk 641 (or solid state drive) and/or removable media drive 642 may contain one or more data stores and data files used by embodiments of the present disclosure. The data store 640 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 620 may also be employed in a multiprocessing arrangement to execute the one or more sequences of instructions contained in system memory 630. In alternative embodiments, hard-wired circuitry may be used in place of or in combination with software instructions. Thus, embodiments are not limited to any specific combination of hardware circuitry and software.

As stated above, the computer system 610 may include at least one computer readable medium or memory for holding instructions programmed according to embodiments of the invention and for containing data structures, tables, records, or other data described herein. The term "computer readable medium" as used herein refers to any medium that participates in providing instructions to the processors 620 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 641 or removable media drive 642. Non-limiting examples of volatile media include dynamic memory, such as system memory 630. Non-limiting examples of transmission media include coaxial cables, copper wire, and fiber optics, including the wires that make up the system bus 621. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 600 may further include the computer system 610 operating in a networked environment using logical connections to one or more remote computers, such as remote computing device 680. The network interface 670 may enable communication, for example, with other remote devices 680 or systems and/or the storage devices 641, 642 via the network 671. Remote computing device 680 may be a personal computer (laptop or desktop), a mobile device, a server, a router, a network PC, a peer device or other common network node, and typically includes many or all of the elements described above relative to computer system 610. When used in a networking environment, computer system 610 may include modem 672 for establishing communications over a network 671, such as the Internet. Modem 672 may be connected to system bus 621 via user network interface 670, or via another appropriate mechanism.

Network 671 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 610 and other computers (e.g., remote computing device 680). The network 671 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 671.

It should be appreciated that the program modules, applications, computer-executable instructions, code, or the like depicted in FIG. 4 as being stored in the system memory 630 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 610, the remote device 680, and/or hosted on other computing device(s) accessible via one or more of the network(s) 671, may be provided to support functionality provided by the program modules, applications, or computer-executable code depicted in FIG. 4 and/or additional or alternate functionality. Further, functionality may be modularized differently such that processing described as being supported collectively by the collection of program modules depicted in FIG. 4 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 4 may be implemented, at least partially, in hardware and/or firmware across any number of devices.

It should further be appreciated that the computer system 610 may include alternate and/or additional hardware, software, or firmware components beyond those described or depicted without departing from the scope of the disclosure. More particularly, it should be appreciated that software, firmware, or hardware components depicted as forming part of the computer system 610 are merely illustrative and that some components may not be present or additional components may be provided in various embodiments. While various illustrative program modules have been depicted and described as software modules stored in system memory 630, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1. An autonomous system configured to pick and place objects into containers, the autonomous system comprising:

a robot defining an end effector configured to grasp a first object within a workspace, the first object defining a bottom end and a top end opposite the bottom end along a transverse direction;
a first camera configured to capture a first image of the first object along the transverse direction while the robot grasps the first object, the first image including the bottom end;
a second camera configured to capture a second image of a container within the workspace; and
a memory storing instructions that, when executed by the one or more processors, cause the autonomous system to:

based on the second image, generate a heightmap of the container, the heightmap indicating respective distances defined by the container and any objects within the container along the transverse direction;

and
based on the heightmap and the first image, perform an optimization so as to determine an optimal pose within the container for the first object, the optimal pose defining a location within the container and an orientation of the first object.

2. The autonomous system as recited in claim 1, wherein the robot is further configured to place the first object within the container in the optimal pose.

3. The autonomous system as recited in claim 1, wherein the container defines a bottom end and a top end opposite the bottom end along the transverse direction, the bottom end positioned farther from the second camera along the transverse direction as compared to the top end, the top end defining an opening and walls of the container around the opening such that the second camera is further configured to capture the second image of the container from a perspective along the transverse direction.

4. The autonomous system as recited in claim 3, wherein the bottom end of the first object faces the bottom end of the container, the memory further storing instructions that, when executed by the one or more processors, further cause the autonomous system to:

based on the heightmap, determine whether one or more areas of the objects within the container are curved or tilted so as to define a nonzero slope ratio with respect to the transverse direction; and
when one or more areas of objects within the container define the nonzero slope ratio, penalize those one or more areas during the optimization.

5. The autonomous system as recited in claim 4, the memory further storing instructions that, when executed by the one or more processors, further cause the autonomous system to:

determine a plurality of contact surfaces corresponding to a plurality of candidate poses of the first object within the container, the contact surfaces defined by the walls of the container, the bottom end of the container, and outer surfaces of the objects within the container; and
selecting an optimal contact surface of the plurality of contact surfaces so as define a selected contact surface, wherein the first object is proximate to the selected contact surface when the first object is disposed in the optimal pose.

6. The autonomous system as recited in claim 5, the memory further storing instructions that, when executed by the one or more processors, further cause the autonomous system to:
based on the heightmap, identify a plurality of corner locations defined by two sides of at least one of the objects within the container or the walls of the container, the plurality of corner locations defining initial candidate poses of the plurality of candidate poses.

7. The autonomous system as recited in claim 2, wherein the robot is further configured to place the first object within the container in the optimal pose without re-adjusting the first object or any of the objects within the container after placement in the container.

8. The autonomous system as recited in claim 2, the memory further storing instructions that, when executed by the one or more processors, further cause the autonomous system to:

after placing the first object within the container, capture a new image of the container along the transverse direction;
based on the new image, generate an updated heightmap of the container, the updated heightmap indicating respective distances defined by the container, the first object, and any other objects within the container along the transverse direction; and
based on the heightmap, perform another optimization so as to determine a second optimal pose within the container for a second object, the second optimal pose defining a second location within the container and a second orientation of the second object.

9. A method performed by an autonomous system including a robot configured to pick and place objects into containers within a workspace, the method comprising:

grasping, by the robot, a first object that defines a bottom end and a top end opposite the bottom end along a transverse direction;
obtaining a first image, from a first camera, of the first object along the transverse direction while the robot grasps the first object, the first image including the bottom end;
obtaining a second image, from a second camera, of a container within the workspace;
based on the second image, generating a heightmap of the container, the heightmap indicating respective distances defined by the container and any objects within the container along the transverse direction; and
based on the heightmap and the first image, performing an optimization so as to determine an optimal pose within the container for the first object, the optimal pose defining a location within the container and an orientation of the first object.

10. The method as recited in claim 9, the method further comprising:
the robot placing the first object within the container in the optimal pose, without re-adjusting the first object or any other objects within the container after placement in the container.

11. The method as recited in claim 9, wherein the container defines a bottom end and a top end opposite the bottom end along the transverse direction, the bottom end positioned farther from the second camera along the transverse direction as compared to the top end, the top end defining an opening and walls of the container around the opening, the method further comprising:

obtaining the second image of the container from a perspective along the transverse direction;
based on the heightmap, determining whether one or more areas of the objects within the container are curved or tilted so as to define a nonzero slope ratio with respect to the transverse direction; and
when one or more areas of the objects within the container define the nonzero slope ratio, penalizing those one or more areas during the optimization.

12. The method as recited in claim 11, the method further comprising:

determining a plurality of contact surfaces corresponding to a plurality of candidate poses of the first object within the container, the contact surfaces defined by the walls of the container, the bottom end of the container, and outer surfaces of the objects within the container; and
selecting an optimal contact surface of the plurality of contact surfaces so as define a selected contact surface, wherein the first object is proximate to the selected contact surface when the first object is disposed in the optimal pose.

13. The method as recited in claim 12, the method further comprising:
based on the heightmap, identifying a corner location defined by two sides of at least one of the objects within the container or the walls of the container, the corner location defining an initial candidate pose of the plurality of candidate poses.

14. The method as recited claim 13, the method further comprising:

based on a shape defined by the first object and a boundary defined by the corner location, determining an angle of rotation about the transverse direction so as to optimize the initial candidate pose, thereby aligning the shape with the boundary,

wherein, when the angle of rotation is applied to the first object, the first object is positioned in the orientation of the optimal pose that corresponds to the corner location.

15. The method as recited in claim 14, the method further comprising:

after grasping the first object, the robot rotating the first object about the transverse direction an amount defined by the angle of rotation, wherein the amount can be any value between 0 and 360 degrees; and

after rotating the first object, placing the first object within the container in the optimal pose at the corner location.

**FIG. 1**

_200_

202 — CAPTURE IMAGE OF PACKING CONTAINER

204 — CONSTRUCT HEIGHTMAP

206 — GRASP OBJECT

208 — CAPTURE IMAGE OF GRASPED OBJECT

210 — ESTIMATE GEOMETRY OF GRASPED OBJECT

212 — DETERMINE OPTIMAL PLACEMENT POSE

214 — EXECUTE PLACEMENT

216 — IS THERE ANOTHER OBJECT?

YES

NO

218 — END

**FIG. 2**

FIG. 3

600

610

630

620

STORAGE 640

641

642

ROM 631

BIOS 633

PROCESSORS

DISK/MEDIA
CONTROLLER

643

RAM 632

OPERATING
SYSTEM 634

APPLICATION
PROGRAMS 635

OTHER
PROGRAM
MODULES 636

SYSTEM BUS

621

660

670

USER INPUT
INTERFACE

NETWORK
INTERFACE

661

672

NETWORK

680

671

**FIG. 4**

Europäisches
Patentamt

European
Patent Office

Office européen
des brevets

# EUROPEAN SEARCH REPORT

**Application Number**

EP 23 15 4371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 491 654 B2 (MUJIN INC [JP]) 8 November 2022 (2022-11-08) <br> * column 1, line 16 – line 18 * <br> * column 3, line 1 – line 4 * <br> * column 4, line 61 – line 63 * <br> * column 5, line 4 – line 8 * <br> * column 6, line 14 – line 32 * <br> * column 7, line 9 – line 13 * <br> * column 14, line 60 – line 65 * <br> * column 17, line 66 – column 18, line 5 * <br> * column 25, line 25- – line 29 * <br> * column 26, line 3 – line 12 * <br> * column 32, line 49 – line 59 * <br> * column 34, line 65 – column 35, line 3 * <br> * column 39, line 24 – line 56 * <br> * column 40, line 19 – line 22 * <br> ----- | 1-15 | INV. <br> B25J9/16 |

TECHNICAL FIELDS
SEARCHED      (IPC)

B25J
G05B

The present search report has been drawn up for all claims

| Place of search | Date of completion of the search | Examiner |
|---|---|---|
| The Hague | 11 July 2023 | Bassi, Luca |

EPO FORM 1503 03.82 (P04C01)

## ANNEX TO THE EUROPEAN SEARCH REPORT
## ON EUROPEAN PATENT APPLICATION NO.

**EP 23 15 4371**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-07-2023**

| Patent document cited in search report | | Publication date | Patent family member(s) | | Publication date |
|---|---|---|---|---|---|
| US 11491654 | B2 | 08-11-2022 | CN | 112589791 A | 02-04-2021 |
| | | | CN | 112775960 A | 11-05-2021 |
| | | | DE | 102020127473 A1 | 15-07-2021 |
| | | | JP | 6771799 B1 | 21-10-2020 |
| | | | JP | 2021074867 A | 20-05-2021 |
| | | | JP | 2021075395 A | 20-05-2021 |
| | | | KR | 20210054448 A | 13-05-2021 |
| | | | US | 2021129333 A1 | 06-05-2021 |
| | | | US | 2021129334 A1 | 06-05-2021 |
| | | | US | 2023150134 A1 | 18-05-2023 |

EPO FORM P0459

For more details about this annex : see Official Journal of the European Patent Office, No. 12/82